(19) Europäisches Patentamt
European Patent Office
Office européen des brevets

(11) **EP 3 069 955 A1**

(12) **EUROPEAN PATENT APPLICATION**
published in accordance with Art. 153(4) EPC

(43) Date of publication:
**21.09.2016 Bulletin 2016/38**

(21) Application number: **14860982.9**

(22) Date of filing: **07.11.2014**

(51) Int Cl.:
*B61L 25/02* (2006.01)    *B60L 3/00* (2006.01)
*B60M 1/28* (2006.01)    *G06T 7/00* (2006.01)

(86) International application number:
**PCT/JP2014/079526**

(87) International publication number:
**WO 2015/068788 (14.05.2015 Gazette 2015/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.11.2013 JP 2013232760**

(71) Applicant: **Meidensha Corporation
Tokyo 141-6029 (JP)**

(72) Inventors:
• **FUKAI, Hironobu
Tokyo 141-6029 (JP)**
• **NIWAKAWA, Makoto
Tokyo 141-6029 (JP)**

(74) Representative: **Strehl Schübel-Hopf & Partner
Maximilianstrasse 54
80538 München (DE)**

(54) **TRAIN SELF-POSITION ESTIMATION DEVICE**

(57) A self-position estimation device for estimating the self-position of a train by comparing reference deviation data previously chronologically acquired of a characteristic change in a overhead line over a travelling train with measurement deviation data chronologically measured of the overhead line at a current position by continuous DP matching is provided with: a continuous DP matching unit (40) that calculates the position in a sequence of the reference deviation data at which the measurement deviation data matches the most with the reference deviation data by performing extensible/contractible matching with respect to the reference deviation data input by a reference deviation data input unit (10) and stored in a storage unit (30) as a database and to the measurement deviation data input by a measurement deviation data input unit (20); and a self-position estimation unit (50) that estimates the self-position of the train using a continuous DP matching result from the continuous DP matching unit (40) and absolute position information.

*Fig.7*

**Description**

TECHNICAL FIELD

The present invention relates to a train self-position estimation device utilizing continuous DP matching.

BACKGROUND ART

Non-Patent Document 1 (Seiichi Uchida, "DP Matching - Fundamentals and Applications-" IEICE technical report, PRMU, Vol. 166, pp. 31-36, 2006) mentions that elastic matching can be performed even between pieces of data that differ in data length, by using DP matching (also referred to as dynamic programming).

In Patent Document 1 (Japanese Patent Application Publication No. 2008-247154, "TRAIN POSITION DETECTING DEVICE AND TRAIN CONTROL DEVICE"), a characteristic object such as scenery or a structure is extracted from an image, and the self-position is figured out through comparisons using images which have been captured in advance and whose captured locations are known and their characteristic features.

In Patent Document 2 (Japanese Patent Application Publication No. 2011-201426, "TRAIN-MOUNTED IMAGE PROCESSING SYSTEM"), the position of a vehicle can be figured out by using matching of image information, in addition to the GPS and encoder information.

Patent Document 3 (Japanese Patent Application Publication No. 2011-209026, "TRAIN SPEED MEASURING SYSTEM") is a technique in which a marker is provided on a track, and the speed is figured out through image recognition of this marker.

In Patent Document 4 (Japanese Patent Application Publication No. 2008-298733, "APPARATUS FOR MEASURING WEAR OF TROLLEY WIRE BY IMAGE PROCESSING"), a cluster of several lines of image obtained by a line sensor is processed such that the wear of an overhead line can be measured temporally continuously.

In Patent Document 5 (Japanese Patent Application Publication No. 2002-37070, "VEHICLE POSITION DETECTOR AND VEHICLE SPEED DETECTOR"), the position of a vehicle can be detected by using a ranging sensor.

Patent Document 6 (Japanese Patent Application Publication No. 2010-243417, "DEVICE FOR INSPECTION OF TROLLEY WIRE") proposes an improvement in a sensor installation method for inspecting an overhead line by using a 3D scanner, and also proposes detection of a trolley wire therewith.

In Patent Document 7 (Japanese Patent Application Publication No. 2010-243416, "DEVICE AND METHOD FOR INSPECTION OF TROLLEY WIRE"), for detection of a continuous overhead line, its straightness is checked and a search range is limited, thereby improving the accuracy of the overhead line detection.

PRIOR ART DOCUMENTS

PATENT DOCUMENTS

Patent Document 1: Japanese Patent Application Publication No. 2008-247154
Patent Document 2: Japanese Patent Application Publication No. 2011-201426
Patent Document 3: Japanese Patent Application Publication No. 2011-209026
Patent Document 4: Japanese Patent Application Publication No. 2008-298733
Patent Document 5: Japanese Patent Application Publication No. 2002-37070
Patent Document 6: Japanese Patent Application Publication No. 2010-243417
Patent Document 7: Japanese Patent Application Publication No. 2010-243416

NON-PATENT DOCUMENT

Non-Patent Document 1: Seiichi Uchida, "DP Matching - Fundamentals and Applications-" IEICE technical report, PRMU, Vol. 166, pp. 31-36, 2006

SUMMARY OF THE INVENTION

PROBLEMS TO BE SOLVED BY THE INVENTION

Train self-position estimation methods have heretofore used the GPS or encoder information.

However, in these methods, the position estimation has errors, and it is also difficult to distinguish whether the position is at the inbound line or at the outbound line. In view of this, methods using image processing and methods using a ranging sensor have been proposed as more accurate methods.

The method in Non-Patent Document 1 is a method capable of matching between pieces of data differing in data length.

In the method in Patent Document 1, self-position estimation is performed by extracting characteristic points from the scenery and structures and performing matching using them. There is, however, a problem that the self-position estimation cannot be performed when such objects are not present.

The method in Patent Document 2 requires combination with the GPS and an encoder, and also uses characteristic patterns such as railroad crossings, which leads to a problem that the self-position estimation cannot be performed at short intervals, as in Patent Document 1.

In the method in Patent Document 3, markers are provided on a track, which allows high-speed, high-frame-rate self-position estimation. There is, however, a problem that the markers need to be prepared on the track.

The method in Patent Document 4 is capable of imaging of an overhead line and inspection of the wear and deviation of the overhead line with a line sensor, but is not capable of self-position estimation.

The method in Patent Document 5 is capable of figuring out the speed and the position. There is, however, a problem that reflectors need to be prepared that serve as references for calculating the position and the speed with a ranging sensor.

The method in Patent Document 6 discusses how a sensor should be placed. As for the method of detecting an overhead line, the lowest point in measured data is used. Thus, the method cannot be considered robust in the presence of a plurality of overhead lines or in the presence of a crossover, and is also affected by the influence of noise.

In the method in Patent Document 7, a cluster of several image lines of image of an overhead line is processed, and the connectivity between the lines is checked. In this way, the wear of the overhead line can be measured accurately. There is, however, a problem that the method is a deterministic method and the result may vary depending on how the image is divided to obtain the cluster of several lines.

MEANS FOR SOLVING THE PROBLEMS

A train self-position estimation device according to claim 1 of the present invention for solving the above problems is a train self-position estimation device that estimates a self-position of a train by comparing overhead line data that is acquired as a reference by collecting characteristic changes of an overhead line above the train in time series in advance during travel of the train (hereinafter referred to as the reference overhead-line data) and overhead line data that is acquired by measuring the overhead line at a current position in time series (hereinafter referred to as the measured overhead-line data) with each other by means of continuous DP matching, characterized in that the self-position estimation device comprises: a reference-overhead-line-data input unit that inputs the reference overhead-line data; a. storage unit that stores the reference overhead-line data inputted by the reference-overhead-line-data input unit as a database; a measured-overhead-line-data input unit that inputs the measured overhead-line data; a continuous-DP-matching unit that performs elastic matching on the reference overhead-line data inputted by the reference-overhead-line-data input unit and stored in the storage unit as the database and the measured overhead-line data inputted by the measured-overhead-line-data input unit, and calculates where in the series of reference information data the measured information data best matches; and a self-position estimation unit that estimates the self-position of the train by using a result of the continuous DP matching by the continuous-DP-matching unit and absolute position information.

A train self-position estimation device according to claim 2 of the present invention for solving the above problems is characterized in that, in claim 1, one or a combination of two or three of deviation of the overhead line, height of the overhead line, and wear width of the overhead line is used as the overhead line data.

A train self-position estimation device according to claim 3 of the present invention for solving the above problems is characterized in that, in claim 1, the overhead line data is acquired by image processing.

A train self-position estimation device according to claim 4 of the present invention for solving the above problems is characterized in that, in claim 1, the overhead line data is acquired by a ranging sensor installed on the train.

A train self-position estimation device according to claim 5 of the present invention for solving the above problems is characterized in that, in claim 1, the measured overhead-line data is time-series data at the current position and a plurality of positions before and after the current position.

A train self-position estimation device according to claim 6 of the present invention for solving the above problems is characterized in that, in claim 1, speed of the train during the acquisition of the measured overhead-line data is different from speed of the train during the acquisition of the reference overhead-line data.

A train self-position estimation device according to claim 7 of the present invention for solving the above problems is characterized in that, in claim 1, the continuous-DP-matching unit calculates where in the series of reference information data the measured information data best matches, by finding the minimum value among values each being the sum of squares of Euclidean distances between model points corresponding to the reference overhead-line data and input points corresponding to the measured overhead-line data.

EFFECTS OF THE INVENTION

(1) The self-position of a train can be found with high accuracy.
(2) The self-position of a train can be found at short intervals.
(3) Self-position estimation is possible even if the speed is different from when images of the reference data are captured.
(4) Stable self-position estimation is possible by using a plurality of pieces of one or a combination of two or three of deviation information, height information, and wear width information.
(5) No GPS or encoder is required.
(6) The GPS or encoders cannot detect when the train enters the inbound line or the outbound line by mistake, whereas the present invention can detect such a situation since the inbound line and the outbound line have mutually different deviation information, height information, and wear width information.

BRIEF DESCRIPTION OF THE DRAWINGS

[Fig. 1] Fig. 1 is a schematic diagram of matching.
[Fig. 2] Fig. 2 is a graph showing an example of DP matching.
[Fig. 3] Fig. 3 is a graph showing sets of paths for distance calculation in the DP matching.
[Fig. 4] Fig. 4 is a graph showing an optimum route.
[Fig. 5] Fig. 5 is an explanatory diagram of continuous DP matching.
[Fig. 6] Fig. 6 is a flowchart according to a first (fifth) embodiment of the present invention.
[Fig. 7] Fig. 7 is a block diagram showing a device configuration according to the first (fifth) embodiment of the present invention.
[Fig. 8] Fig. 8 is a flowchart according to a second (sixth) embodiment of the present invention.
[Fig. 9] Fig. 9 is a block diagram showing a device configuration according to the second (sixth) embodiment of the present invention.
[Fig. 10] Fig. 10 is a flowchart according to a third embodiment of the present invention.
[Fig. 11] Fig. 11 is a block diagram showing a device configuration according to the third embodiment of the present invention.
[Fig. 12] Fig. 12 is a flowchart according to a fourth (seventh) embodiment of the present invention.
[Fig. 13] Fig. 13 is a block diagram showing a device configuration according to the fourth (seventh) embodiment of the present invention.

MODES FOR CARRYING OUT THE INVENTION

There have been demands to figure out where a train is currently travelling.
Encoders or the like have conventionally been used, yet encoders have errors.
Also, methods using the GPS or the like have been alternative options, yet such methods also have errors of several tens of meters.
As compared to these, information obtained from an image or a ranging sensor is high-resolution information. Then, if such information can be used to estimate the self-position, accurate self-position estimation would be possible.
The present invention concerns a technique involving measuring an overhead line by using a line sensor capable of high-frame-rate imaging as described in Patent Document 4 or installing a ranging sensor on the upper side of a vehicle and measuring the overhead line by using the ranging sensor, and performing self-position estimation by utilizing a characteristic feature(s) of trace of the overhead line.
There have heretofore been self-position estimation methods as those in Patent Document 1 and 2 that use images that can be captured with a camera. Such methods, however, can be used only when characteristic information such as scenery or a structure is present.
In contrast, if self-position estimation is possible only with information that can be obtained from a line camera, the self-position can be figured out at a high rate (e.g. at 1000 fps in the case of a 1000-fps camera). There have been methods as that in Patent Document 3 that use a track, yet the shape remains constantly the same, which makes it difficult to estimate the self-position only with image information.

Unlike tracks, overhead lines change in characteristic ways. Thus, accurate self-position estimation is possible using only image information. In addition, information on overhead lines can be distinguished between inbound and outbound lines since inbound and outbound overhead lines have mutually different information.

Also, there have been methods as that in Patent Document 5 that use a ranging sensor, yet dedicated reflectors or the like need to be prepared around a track, which leads to a high installation cost.

With these taken into consideration, self-position estimation is performed using overhead lines, which are installed always for electric trains. Unlike tracks, overhead lines change in characteristic ways, and accurate self-position estimation is thus possible using only distance information.

The present invention uses, for example, an overhead-line detection method (image processing) such as that in Patent Document 4 or a ranging sensor to extract information on the deviation, height, and/or wear width (these will be collectively referred to as overhead line information) of an overhead line viewed from a train. Time-series data of this information is prepared in advance as a database (this data will be referred to as reference overhead-line data), and time-series data of overhead line information is measured afterwards (this data will be referred to as measured overhead-line data). The self-position of the train is estimated by performing matching between the reference overhead-line data and the measured overhead-line data.

Each time a train is operated, the speed of the train may not be the same, yet the absolute position of the overhead line does not change greatly. Then, it is considered that the self-position of a train can be found by using the overhead line information. Note that the overhead line kilometrage is assumed to be set in advance along a reference overhead line.

The self-position may be estimated by detecting the overhead line information and performing matching between the overhead line information and a reference point. However, matching using only one point is expected to be difficult since there is a possibility that measurement errors may occur and/or identical pieces of data may be present in the overhead line information.

In view of this, the overhead line information on points around the reference point may be used to perform matching between a plurality of points. In this way, the influence of measurement errors and similar pieces of data can be considered to be reduced. However, the frame numbers to be given to the overhead line information change with the travel speed of the train. Hence, simple matching cannot estimate the self-position.

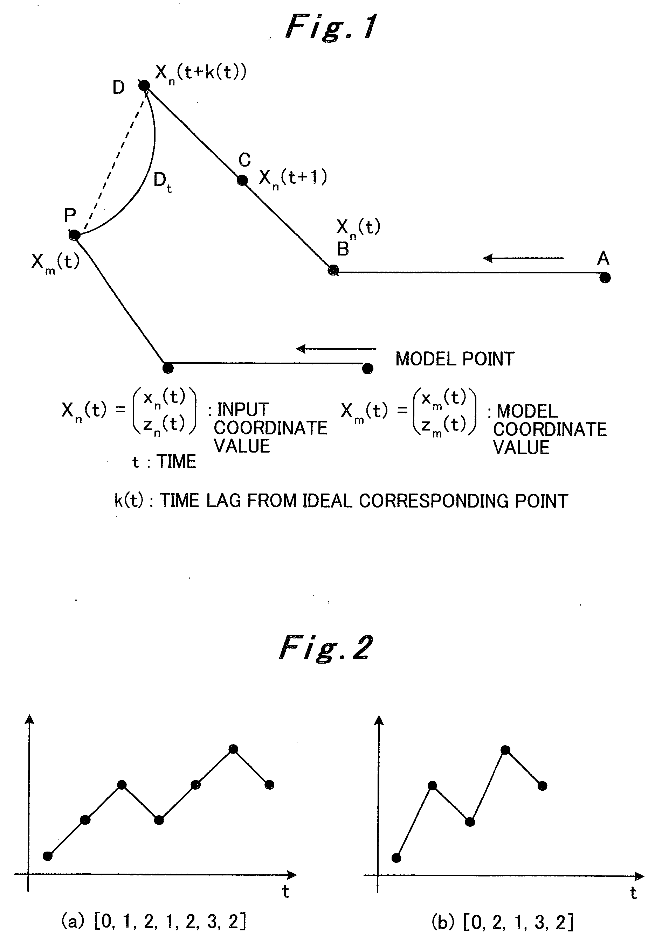

Then, to accommodate the change with the travel speed of the train, DP matching (Non-Patent Document 1) is used, which takes the deviation offset by frames into consideration. In this way, the above problem is solved. Fig. 1 shows a schematic diagram of the matching. An input coordinate value $X_n(t)$ and a model coordinate value $X_m(t)$ are as follows. The input coordinate value corresponds to the measured overhead-line data while the model coordinate value corresponds to the reference overhead-line data.

[Math. 1]

$$X_n(t) = \begin{pmatrix} x_n(t) \\ z_n(t) \end{pmatrix} : \text{ input coordinate value}$$

$$X_m(t) = \begin{pmatrix} x_m(t) \\ z_m(t) \end{pmatrix} : \text{ model coordinate value}$$

$t$: time

$k(t)$: time lag from ideal corresponding point

Here, k(t) represents the time lag from an ideal corresponding point. The "time lag from an ideal corresponding point" assumes the following. With a trace that is exactly the same as two models (the same speed, no measurement error, etc.), the consequence is naturally such that the first model point corresponds to the first input point, the second model point corresponds to the second input points, and the subsequent points coincides with each other in the same manner. Here, if one point corresponds to the other at the same timing in the time of the model and the time of the input operation, this point is called an "ideal corresponding point."

However, it is in fact unlikely that the input and the model coincide completely with each other. For this reason, the time lag from the ideal corresponding point is shown as k(t). For example, in Fig. 1, if a point P ideally corresponds to a point C but actually corresponds to an input point D, k(t) is equal to 1 since the point P corresponds to the first point from the point C. If a point A is the ideal corresponding point, k (t) is equal to 2.

With the above parameters, Evaluation Formulas (1) and (2) are newly devised as follows.

[Math. 2]

$$S_t = \min \sum_t D_t^2 \qquad (1)$$

$$D_t = \left\| X_n\big(t + k(t)\big) - X_m(t) \right\| \qquad (2)$$

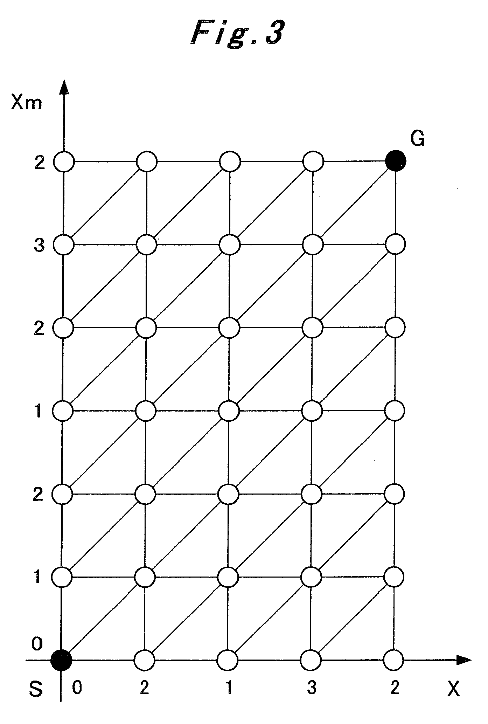

$S_t$ is the sum of the evaluation values at all points. $D_t$ is the Euclidean distance between the input point and the model point corresponding to each other. As for the solution to this problem, assuming that each piece of data is a one-dimensional vector and that the input data has values of [0, 2, 1, 3, 2] while the reference data has values of [0, 1, 2, 1, 2, 3, 2] (Fig. 2), then, performing matching therebetween means to calculate the shortest path in Fig. 3.

Dynamic programming is a method in which, in calculating this path, calculation results and paths obtained before the end of the path are stored to shorten the calculation time. For example, there are three possible patterns of paths to a point (1, 1), at which the horizontal axis indicates 2 and the vertical axis indicates 1, namely (0, 0) → (1, 1), (0, 0) → (0, 1) → (1, 1), and (0, 0) → (1, 0) → (1, 1). Here, the distances of these patterns are 1, 2, and 3, respectively. Thus, the path from (0, 0) directly to (1, 1) is the shortest in distance.

With this distance and path stored, finding a path to, for example, (2, 1) only requires considering three patterns of (1, 0) → (2, 1), (2, 0) → (2, 1), and (1, 1) → (2, 1), instead of considering five patterns of (0, 0) → (1, 0) → (2, 0) → (2, 1), (0, 0) → (1, 0) → (2, 1), (0, 0) → (1, 0) → (1, 1) → (2, 1), (0, 0) → (1, 1) → (2, 1), and (0, 0) → (0, 1) → (1, 1) → (2, 1).

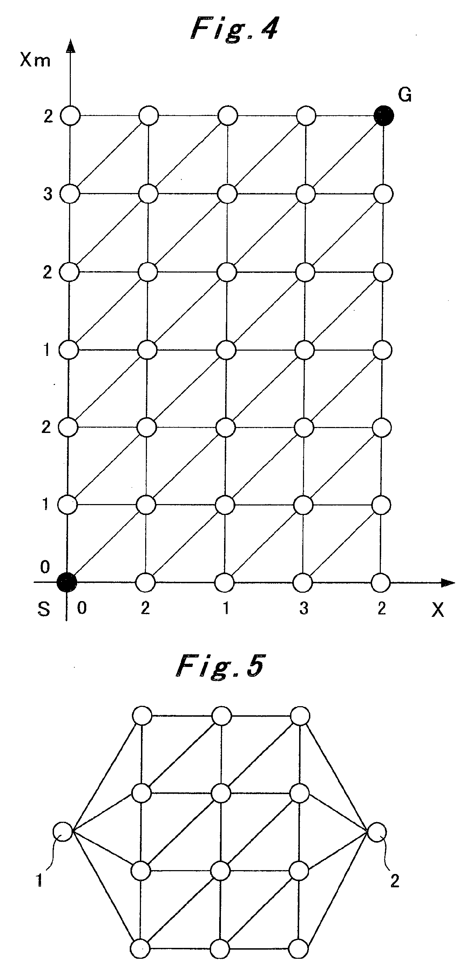

If the shortest route up to the last path is stored as described above, then that route should simply be traced after the goal is reached by choosing all possible paths at each point. Incidentally, in the case of this pattern, the optimum route is as shown in Fig. 4.

Meanwhile, in the actual processing, there is a problem that how many model points to set for the measurement points is unknown. In that case, the start and the goal cannot be uniquely determined.

This can be solved by providing free nodes as shown in Fig. 5, the distance from each free node to the next point being equal to 0. This is called continuous DP. In the present invention, this continuous DP is used to estimate the self-position.

The continuous DP will be described with reference to Fig. 5. While the start point and the end point are determined in the matching in Figs. 3 and 4, the start point and the end point are not determined in the case of the continuous DP.

In order to express this, free nodes are provided, the distance from each free node to the next node being equal to 0. In this example, a free node used to determine the start point is a free node 1, and a free node used to determine the end point is a free node 2. While the matching in Figs. 3 and 4 is between five points and seven points, providing the free nodes is equivalent to matching between three points and one to four points.

The continuous DP will also be referred to as elastic matching since the number of matching target points varies as described above. In fact, the number of corresponding points can "elastically" vary from one to four points.

Evaluation Formulas (1) and (2) mentioned above are used for the continuous DP. By using these formulas, how much the measured overhead-line data and the reference overhead-line data are distant from each other in Euclidean distance is evaluated.

For instance, in the example in Figs. 3 and 4, if the path shifts from the start point to the node immediately above, then X = 0 and Xm = 1, and therefore the evaluation value by Formula (2) is 1. If the path shifts from the start point to the node diagonally above toward the right, then X = 2 and Xm = 1, and therefore the evaluation value by Evaluation Formula (2) is 1. If the path shifts from the start point to the node to the right, then X = 2 and Xm = 0, and therefore the evaluation value by Evaluation Formula (2) is 2. The DP matching involves adding up the values of the squares of these evaluation values until the goal node is reached (this process corresponds to Evaluation Formula (1)), and finding the route with the smallest sum. The same process is performed even on actual deviation data.

EMBODIMENT 1

(1) Fundamental Idea (Embodiment 1)

An object of the present invention is to provide a self-position estimation device capable of estimating the self-position of a train by extracting the deviation of an overhead line in time series by means of image processing and comparing previously prepared reference overhead-line deviation and measured overhead-line deviation with each other by means of continuous DP matching.

"Extracting the deviation of an overhead line in time series by means of image processing" means, for example, installing a line sensor on the roof of the train such that the line sensor faces vertically upward, capturing luminance signals on a line-by-line basis by scanning the overhead line in sideways along the direction of crossties, and collecting the deviation of the overhead line in time series based on the difference in contrast between the overhead line and the background in an image in which the captured lines of luminance signals are arranged in time series, as mentioned in Patent Document 4, for example. The present invention is characterized in that the self-position of a vehicle can be figured out upon collection of the overhead line deviation. The method of collecting the deviation is not limited to the method in Patent Document 4 above, which uses a line sensor.

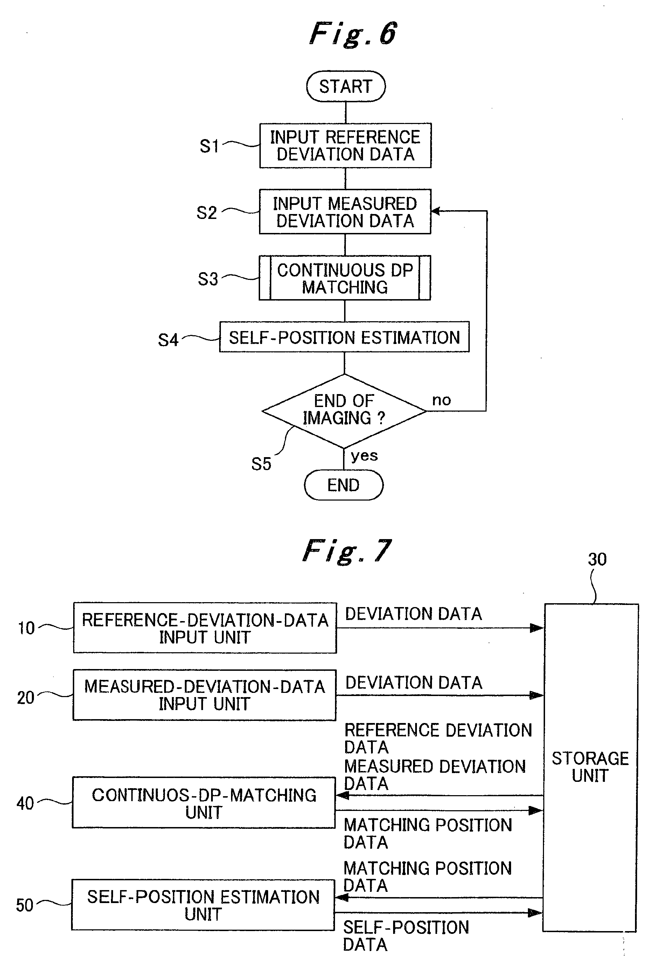

Fig. 7 shows a specific example of a device configuration in this embodiment.

As shown in Fig. 7, a train self-position estimation device according to this embodiment includes a reference-deviation-data input unit 10, a measured-deviation-data input unit 20, a storage unit 30, a continuous-DP-matching unit 40, and a self-position estimation unit 50.

The reference-deviation-data input unit 10 inputs deviation information on overhead lines that is acquired as a reference by imaging and analyzing characteristic changes of the overhead lines in advance (reference deviation data) and absolute position information and stores them in the storage unit 30.

The measured-deviation-data input unit 20 inputs deviation information on an overhead line that is measured at the current position and deviation information on the last several lines before the current position (measured deviation data) and stores them in the storage unit 30.

The storage unit 30 stores the deviation information including the reference deviation data and the measured deviation data, the absolute position information, matching result information, and the like as a database.

The continuous-DP-matching unit 40 performs elastic matching by using the reference deviation data and the measured deviation data and calculates where in the series of reference deviation data the measured deviation data best matches. The result of the continuous DP matching thus calculated (matching position data) is outputted to and stored in the storage unit 30. Evaluation Formulas (1) and (2) mentioned above are used for the elastic matching (continuous DP).

The DP matching is capable of accommodating changes originating from the train travel speed. Thus, the self-position can be accurately estimated even if the train speed during the acquisition of the reference deviation data and the train speed during the acquisition of the measured deviation data are different.

The self-position estimation unit 50 estimates the self-position of the train by using the result of the continuous DP matching by the continuous-DP-matching unit 40 and the absolute position information.

Here, the absolute position information refers to "kilometrage" information indicating the distance from a station in kilometers.

Note that the continuous-DP-matching unit 40 simply performs the matching between the measured deviation data (measured overhead-line data) and the reference deviation data (reference overhead-line data) and does not find the absolute position information (kilometrage information).

What is found by this matching is only information indicating to which piece of data in the reference overhead-line data the measure overhead-line data corresponds (to be precise, the correspondence between a cluster of measured overhead-line data points and a cluster of reference overhead-line data points since a plurality of pieces of data are used).

Now, if each numbered piece of the reference overhead-line data is provided with kilometrage information, which is absolute position information, the result of the DP matching will also indicate this kilometrage information, which is absolute position information.

For this reason, the self-position estimation unit 50 is provided with the absolute position information together with the reference overhead-line data. In this way, the absolute position information (kilometrage information) on the measured overhead-line data can be figured out.

Fig. 6 shows a flowchart in this embodiment.

Firstly, the deviation information on overhead lines that is acquired as a reference by imaging and analyzing the overhead lines in advance (reference deviation data) is inputted into the reference-deviation-data input unit 10 (Step S1). The absolute position information is also inputted into the reference-deviation-data input unit 10.

Then, the deviation information on an overhead line that is measured at the current position and the deviation information on the last several lines before the current position (measured deviation data) are inputted into the measured-deviation-data input unit 20 (Step S2).

Thereafter, the continuous-DP-matching unit 40 performs elastic matching by using the reference deviation data and the measured deviation data, and calculates where in the series of reference deviation data the measured deviation data best matches (Step S3).

Then, the self-position estimation unit 50 estimates the self-position of the train by using the result of the continuous DP matching by the continuous-DP-matching unit 40 and the absolute position information (Step S4).

Further, Step S2 to Step S4 are iterated until the imaging of the overhead line (the measurement of the overhead line) ends (Step S5).

Embodiment 1 as described above brings about the following advantageous effects.

(1) The self-position of a train can be found with high accuracy.

(2) The self-position of a train can be found with high frequency.

(3) Self-position estimation is possible even if the speed is different from when images of the reference data are captured.

(4) Stable self-position estimation is possible by using a plurality of pieces of deviation information.

(5) No GPS or encoder is required.

(6) The GPS or encoders cannot detect when the train enters the inbound line or the outbound line by mistake, whereas the present invention can detect such a situation since the inbound line and the outbound line have mutually different deviations.

EMBODIMENT 2

(2) Fundamental Idea (Embodiment 2)

An object of the present invention is to provide a self-position estimation device capable of estimating the self-position of a train by extracting the height of an overhead line in time series by means of image processing and comparing previously prepared reference overhead-line height and measured overhead-line height with each other by means of continuous DP matching.

"Extracting the height of an overhead line in time series by means of image processing" means, for example, measuring the height of the overhead line in time series by triangulation using a plurality of line sensors installed on the roof of the train in such a way as to face vertically upward.

The difference from Embodiment 1 is that the height information on the overhead line is used instead of the deviation information. Unlike tracks and the like, the height of overhead lines also change in a characteristic way and is therefore considered usable for self-position estimation.

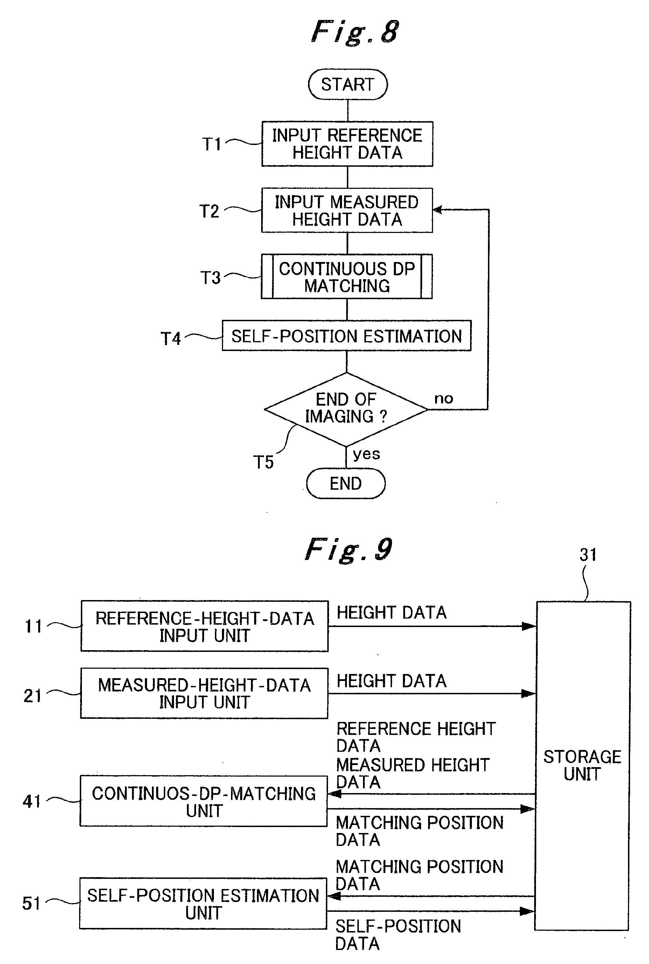

Fig. 9 shows a specific example of a device configuration in this embodiment.

As shown in Fig. 9, a train self-position estimation device according to this embodiment includes a reference-height-data input unit 11, a measured-height-data input unit 21, a storage unit 31, a continuous-DP-matching unit 41, and a self-position estimation unit 51.

The reference-height-data input unit 11 stores, in the storage unit, height information on overhead lines that is acquired as a reference by imaging and analyzing characteristic changes of the overhead lines in advance (reference height data) and absolute position information.

The measured-height-data input unit 12 stores, in the storage unit, height information on an overhead line that is measured at the current position and height information on the last several lines before the current position (measured height data).

The storage unit 31 stores the height information including the reference height data and the measured height data, the absolute position information, matching result information, and the like as a database.

The continuous-DP-matching unit 41 performs elastic matching by using the reference height data and the measured height data and calculates where in the series of reference height data the measured height data best matches. In other words, the continuous-DP-matching unit 41 performs continuous DP matching. The result of the continuous DP matching thus calculated (matching position data) is outputted to and stored in the storage unit 31.

The self-position estimation unit 51 estimates the self-position of the train by using the result of the continuous DP matching and the absolute position information.

Fig. 8 shows a flowchart in this embodiment.

Firstly, the height information on overhead lines that is acquired as a reference by imaging and analyzing the overhead lines in advance (reference height data) is inputted into the reference-height-data input unit 11 (Step T1). The absolute position information is also inputted into the reference-height-data input unit 11.

Then, the height information on an overhead line that is measured at the current position and the height information on the last several lines before the current position (measured height data) are inputted into the measured-height-data input unit 21 (Step T2).

Thereafter, the continuous-DP-matching unit 41 performs elastic matching by using the reference height data and the measured height data, and calculates where in the series of reference height data the measured height data best matches (Step T3).

Then, the self-position estimation unit 51 estimates the self-position of the train by using the result of the continuous DP matching by the continuous-DP-matching unit 41 and the absolute position information (Step T4).

Further, Step T2 to Step T4 are iterated until the imaging of the overhead line (the measurement of the overhead line) ends (Step T5).

Embodiment 2 as described above brings about the following advantageous effects.

(1) The self-position of a train can be found with high accuracy.

(2) The self-position of a train can be found at short intervals.

(3) Self-position estimation is possible even if the speed is different from when images of the reference data are captured.

(4) Stable self-position estimation is possible by using a plurality of pieces of height information.

(5) No GPS or encoder is required.

(6) The GPS or encoders cannot detect when the train enters the inbound line or the outbound line by mistake, whereas the present invention can detect such a situation since the inbound overhead line and the outbound overhead line have mutually different heights.

EMBODIMENT 3

(3) Fundamental Idea (Embodiment 3)

An object of the present invention is to provide a self-position estimation device capable of estimating the self-position of a train by extracting the wear width of an overhead line in time series by means of image processing and comparing previously prepared reference overhead-line wear width and measured overhead-line wear width with each other by means of continuous DP matching.

"Extracting the wear width of an overhead line in time series by means of image processing" means, for example, imaging the overhead line in time series by using a line sensor and inspecting the wear width as in the method in Patent Document 4.

The difference from Embodiments 1 and 2 is that the wear width information on the overhead line is used instead of the deviation or height information. Unlike tracks and the like, the wear width of overhead lines change in a characteristic way and is therefore considered usable for self-position estimation.

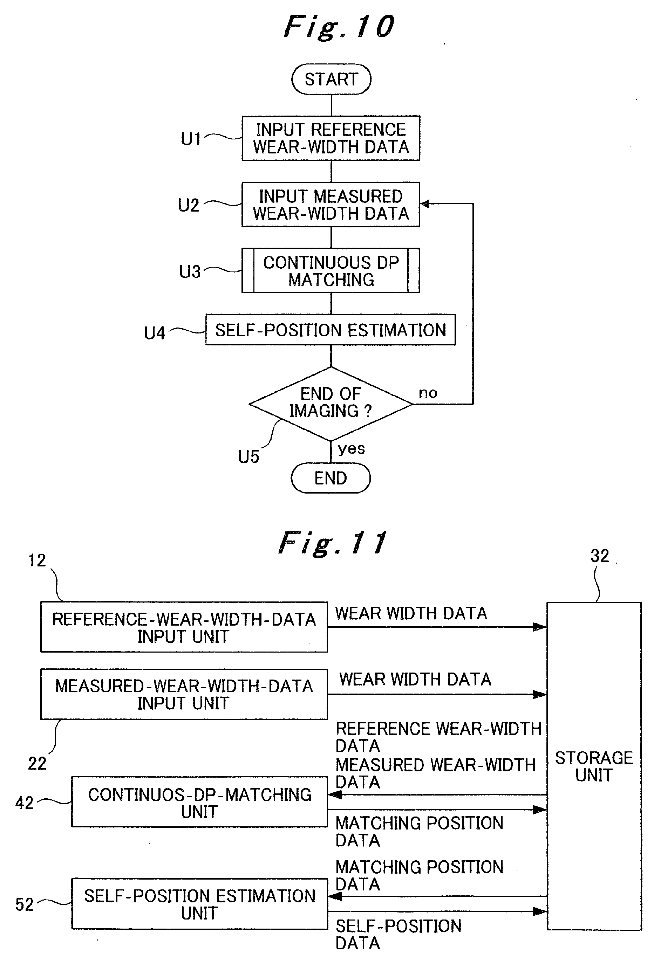

Fig. 11 shows a specific example of a device configuration in this embodiment.

As shown in Fig. 11, a train self-position estimation device according to this embodiment includes a reference-wear-width-data input unit 12, a measured-wear-width-data input unit 22, a storage unit 32, a continuous-DP-matching unit 42, and a self-position estimation unit 52.

The reference-wear-width-data input unit 12 inputs wear width information on overhead lines that is acquired as a reference by imaging and analyzing characteristic changes of the overhead lines in advance (reference wear-width data) and stores absolute position information in the storage unit 32.

The measured-wear-width-data input unit 22 inputs wear width information on an overhead line that is measured at the current position and wear width information on the last several lines before the current position (measured wear-width data) and stores them in the storage unit 32.

The storage unit 32 stores the wear width information including the reference wear-width data and the measured wear-width data, the absolute position information, matching result information, and the like as a database.

The continuous-DP-matching unit 42 performs elastic matching by using the reference wear-width data and the measured wear-width data and calculates where in the series of reference wear-width data the measured wear-width data best matches. In other words, the continuous-DP-matching unit 42 performs continuous DP matching. The result of the continuous DP matching thus calculated (matching position data) is outputted to and stored in the storage unit 32.

The self-position estimation unit 52 estimates the self-position of the train by using the result of the continuous DP matching and the absolute position information.

Fig. 10 shows a flowchart in this embodiment.

Firstly, the wear width information on overhead lines that is acquired as a reference by imaging and analyzing the overhead lines in advance (reference wear-width data) is inputted into the reference-wear-width-data input unit 12 (Step U1). The absolute position information is also inputted into the reference-wear-width-data input unit 12.

Then, the wear width information on an overhead line that is measured at the current position and the wear width information on the last several lines before the current position (measured wear-width data) are inputted into the measured-wear-width-data input unit 22 (Step U2).

Thereafter, the continuous-DP-matching unit 42 performs elastic matching by using the reference wear-width data and the measured wear-width data, and calculates where in the series of reference wear-width data the measured wear-width data best matches (Step U3).

Then, the self-position estimation unit 52 estimates the self-position of the train by using the result of the continuous DP matching by the continuous-DP-matching unit 42 and the absolute position information (Step U4).

Further, Step U2 to Step U4 are iterated until the imaging of the overhead line (the measurement of the overhead line) ends (Step U5).

Embodiment 3 as described above brings about the following advantageous effects.

(1) The self-position of a train can be found with high accuracy.

(2) The self-position of a train can be found at short intervals.

(3) Self-position estimation is possible even if the speed is different from when images of the reference data are captured.

(4) Stable self-position estimation is possible by using a plurality of pieces of wear width information.

(5) No GPS or encoder is required.

(6) The GPS or encoders cannot detect when the train enters the inbound line or the outbound line by mistake, whereas the present invention can detect such a situation since the inbound overhead line and the outbound overhead line have mutually different wear widths.

EMBODIMENT 4

(4) Fundamental Idea (Embodiment 4)

An object of the present invention is to provide a self-position estimation device capable of estimating the self-position of a train by extracting the deviation, height, and wear width of an overhead line in time series by means of image processing and comparing previously prepared reference overhead-line information and measured overhead-line information with each other by means of continuous DP matching.

"Extracting the deviation, height, and wear width of an overhead line in time series by means of image processing" means, for example, measuring the deviation, height, and wear width of the overhead line (these will be collectively referred to as overhead line information) in time series by using a plurality of line sensors installed on the roof of the train in such a way as to face vertically upward.

The difference from Embodiments 1, 2, and 3 is that the deviation, height, and wear width of the overhead line are used together (a combination of two or all three) instead of being used independently of each other. The self-position estimation accuracy is considered to be improved greater when a plurality of types of information is used than when only one type of information is used.

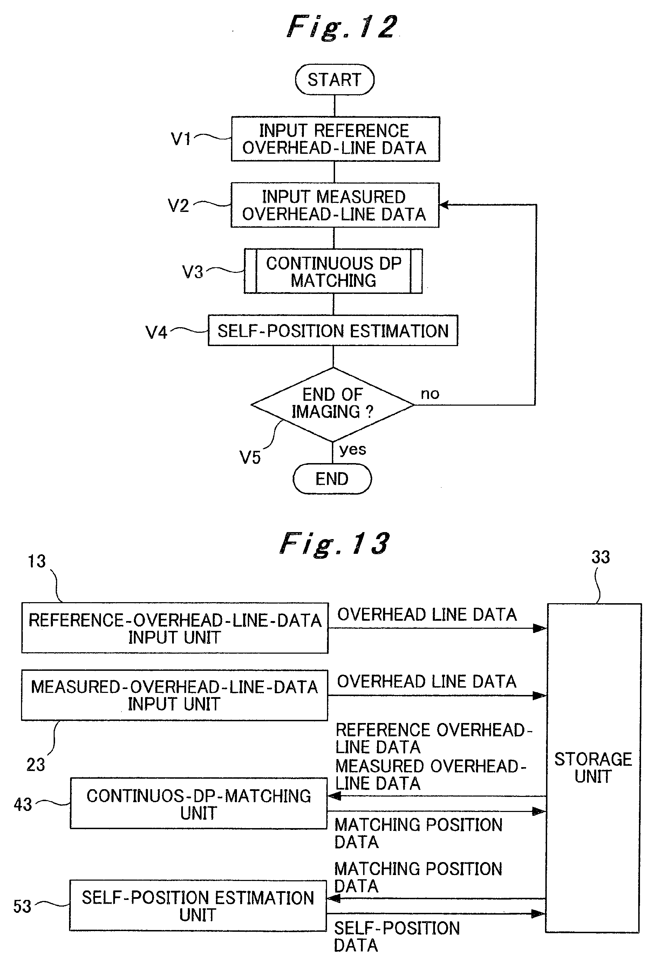

Fig. 13 shows a specific example of a device configuration in this embodiment.

As shown in Fig. 13, a train self-position estimation device according to this embodiment includes a reference-information-data input unit 13, a measured-information-data input unit 23, a storage unit 33, a continuous-DP-matching unit 43, and a self-position estimation unit 53.

The reference information-data input unit 13 inputs information on overhead lines acquired as reference overhead-line information by imaging and analyzing characteristic changes of the overhead lines in advance (reference overhead-line data) and absolute position information and stores them in the storage unit 33.

The measured-information-data input unit 23 inputs overhead line information on an overhead line that is measured at the current position and overhead line information on the last several lines before the current position (measured overhead-line data) and stores them in the storage unit 33.

The storage unit 33 stores the overhead line information including the reference overhead-line data and the measured overhead-line data, the absolute position information, matching result information, and the like as a database.

The continuous-DP-matching unit 43 performs elastic matching by using the reference overhead-line data and the measured overhead-line data and calculates where in the series of reference information data the measured information data best matches. In other words, the continuous-DP-matching unit 43 performs continuous DP matching. The result of the continuous DP matching thus calculated (matching position data) is outputted to and stored in the storage unit 33.

The self-position estimation unit 53 estimates the self-position of the train by using the result of the continuous DP matching and the absolute position information.

Fig. 12 shows a flowchart in the present invention.

Firstly, the overhead line information that is acquired as a reference by performing imaging and analysis in advance (reference overhead-line data) is inputted into the reference-overhead-line-data input unit 13 (Step V1). The absolute position information is also inputted into the reference-overhead-line-data input unit 13.

Then, the overhead line information on an overhead line that is measured at the current position and the overhead line information on the last several lines before the current position (measured overhead-line data) are inputted into the measured-overhead-line-data input unit 23 (Step V2).

Thereafter, the continuous-DP-matching unit 43 performs elastic matching by using the reference overhead-line data and the measured overhead-line data, and calculates where in the series of reference overhead-line data the measured overhead-line data best matches (Step V3).

Then, the self-position estimation unit 53 estimates the self-position of the train by using the result of the continuous DP matching by the continuous-DP-matching unit 43 and the absolute position information (Step V4).

Further, Step V2 to Step V4 are iterated until the imaging of the overhead line (the measurement of the overhead line) ends (Step V5).

Embodiment 4 as described above brings about the following advantageous effects.

(1) The self-position of a train can be found with high accuracy.
(2) The self-position of a train can be found at short intervals.
(3) Self-position estimation is possible even if the speed is different from when images of the reference data are captured.
(4) Stable self-position estimation is possible by using a plurality of pieces of overhead line information.
(5) No GPS or encoder is required.
(6) The GPS or encoders cannot detect when the train enters the inbound line or the outbound line by mistake, whereas the present invention can detect such a situation since the inbound overhead line and the outbound overhead line have mutually different information.

EMBODIMENT 5

(5) Fundamental Idea (Embodiment 5)

An object of the present invention is to provide a self-position estimation device capable of estimating the self-position of a train by extracting the deviation of an overhead line in time series by means of a ranging sensor and comparing previously prepared reference overhead-line deviation and measured overhead-line deviation with each other by means of continuous DP matching.

The difference from Embodiment 1 is that a ranging sensor is used instead of image processing to extract the deviation of the overhead line.

A ranging sensor is installed on the roof of the train in such a way as to face vertically upward, and collects the distance to the overhead line in time series on a line-by-line basis by measuring the overhead line sideways along the direction of crossties. In an image in which the lines of distance are arranged in time series, the overhead line is closer in distance than the background is, and the overhead line can therefore be detected. The ranging sensor is a sensor capable of collecting the distance and its direction. By utilizing that information, the deviation of the overhead line can be collected. Specifically, the deviation of the overhead line can be collected by using a method such as one in Patent Document 6 or Patent Document 7. The present invention is characterized in that the self-position of a vehicle can be figured out upon collection of the overhead line deviation. The method of collecting the deviation is not limited to the methods in the above documents that use a ranging sensor.

A specific example of a device configuration in this embodiment is similar to that in Embodiment 1, which is shown in Fig. 7.

Thus, as shown in Fig. 7, a train self-position estimation device according to this embodiment includes a reference-deviation-data input unit 10, a measured-deviation-data input unit 20, a storage unit 30, a continuous-DP-matching unit 40, and a self-position estimation unit 50.

The reference-deviation-data input unit 10 inputs deviation information on overhead lines that is acquired as a reference by imaging and analyzing characteristic changes of the overhead lines in advance (reference deviation data) and absolute position information and stores them in the storage unit 30.

The measured-deviation-data input unit 20 inputs deviation information on an overhead line that is measured at the current position and deviation information on the last several lines before the current position (measured deviation data) and stores them in the storage unit 30.

The storage unit 30 stores the deviation information including the reference deviation data and the measured deviation data, the absolute position information, matching result information, and the like as a database.

The continuous-DP-matching unit 40 performs elastic matching by using the reference deviation data and the measured deviation data and calculates where in the series of reference deviation data the measured deviation data best matches. In other words, the continuous-DP-matching unit 40 performs continuous DP matching. The result of the continuous DP matching thus calculated (matching position data) is outputted to and stored in the storage unit 30.

The self-position estimation unit 50 estimates the self-position of the train by using the result of the continuous DP matching and the absolute position information.

A flowchart in this embodiment is similar to that in Embodiment 1, which is shown in Fig. 6.

Firstly, the deviation information on overhead lines that is acquired as a reference by imaging and analyzing the overhead lines in advance (reference deviation data) is inputted into the reference-deviation-data input unit 10 (Step S1). The absolute position information is also inputted into the reference-deviation-data input unit 10.

Then, the deviation information on an overhead line that is measured at the current position and the deviation information on the last several lines before the current position (measured deviation data) are inputted into the measured-deviation-data input unit 20 (Step S2).

Thereafter, the continuous-DP-matching unit 40 performs elastic matching by using the reference deviation data and the measured deviation data, and calculates where in the series of reference deviation data the measured deviation data best matches (Step S3).

Then, the self-position estimation unit 50 estimates the self-position of the train by using the result of the continuous DP matching by the continuous-DP-matching unit 40 and the absolute position information (Step S4).

Further, Step S2 to Step S4 are iterated until the imaging of the overhead line (the measurement of the overhead line) ends (Step S5).

Embodiment 5 as described above brings about the following advantageous effects.

(1) The self-position of a train can be found with high accuracy.
(2) The self-position of a train can be found at short intervals.
(3) Self-position estimation is possible even if the speed is different from when the reference data is acquired.
(4) Stable self-position estimation is possible by using a plurality of pieces of deviation information.
(5) No GPS or encoder is required.
(6) The GPS or encoders cannot detect when the train enters the inbound line or the outbound line by mistake, whereas the present invention can detect such a situation since the inbound line and the outbound line have mutually different deviations.

EMBODIMENT 6

(6) Fundamental Idea (Embodiment 6)

An object of the present invention is to provide a self-position estimation device capable of estimating the self-position of a train by extracting the height of an overhead line in time series by means of a ranging sensor and comparing previously prepared reference overhead-line height and measured overhead-line height with each other by means of continuous DP matching.

The difference from Embodiment 5 is that the height information on the overhead line is used instead of the deviation information. Unlike tracks and the like, the height of overhead lines also change in a characteristic way and is therefore considered usable for self-position estimation.

A specific example of a device configuration in this embodiment is similar to that in Embodiment 2, which is shown in Fig. 9.

Thus, as shown in Fig. 9, a train self-position estimation device according to this embodiment includes a reference-height-data input unit 11, a measured-height-data input unit 21, a storage unit 31, a continuous-DP-matching unit 41, and a self-position estimation unit 51.

The reference-height-data input unit 11 inputs height information on overhead lines that is acquired as a reference by imaging and analyzing characteristic changes of the overhead lines in advance (reference height data) and absolute position information and store them in the storage unit 31.

The measured-height-data input unit 21 inputs height information on an overhead line that is measured at the current position and height information on the last several lines before the current position (measured height data) and stores them in the storage unit 31.

The storage unit 31 stores the height information including the reference height data and the measured height data, the absolute position information, matching result information, and the like as a database.

The continuous-DP-matching unit 41 performs elastic matching by using the reference height data and the measured height data and calculates where in the series of reference height data the measured height data best matches. In other words, the continuous-DP-matching unit 41 performs continuous DP matching. The result of the continuous DP matching thus calculated (matching position data) is outputted to and stored in the storage unit 31.

The self-position estimation unit 51 estimates the self-position of the train by using the result of the continuous DP matching and the absolute position information.

A flowchart in this embodiment is similar to that in Embodiment 2, which is shown in Fig. 8.

Firstly, the height information on overhead lines that is acquired as a reference by imaging and analyzing the overhead lines in advance (reference height data) is inputted into the reference-height-data input unit 11 (Step T1). The absolute position information is also inputted into the reference-height-data input unit 11.

Then, the height information on an overhead line that is measured at the current position and the height information on the last several lines before the current position (measured height data) are inputted into the measured-height-data input unit 21 (Step T2).

Thereafter, the continuous-DP-matching unit 41 performs elastic matching by using the reference height data and the measured height data, and calculates where in the series of reference height data the measured height data best matches (Step T3) .

Then, the self-position estimation unit 51 estimates the self-position of the train by using the result of the continuous DP matching by the continuous-DP-matching unit 41 and the absolute position information (Step T4).

Further, Step T2 to Step T4 are iterated until the imaging of the overhead line (the measurement of the overhead line) ends (Step T5) .

Embodiment 6 as described above brings about the following advantageous effects.

(1) The self-position of a train can be found with high accuracy.
(2) The self-position of a train can be found at short intervals.
(3) Self-position estimation is possible even if the speed is different from when the reference data is acquired.
(4) Stable self-position estimation is possible by using a plurality of pieces of height information.
(5) No GPS or encoder is required.
(6) The GPS or encoders cannot detect when the train enters the inbound line or the outbound line by mistake, whereas the present invention can detect such a situation since the inbound line and the outbound line have mutually different heights.

EMBODIMENT 7

(7) Fundamental Idea (Embodiment 7)

An object of the present invention is to provide a self-position estimation device capable of estimating the self-position of a train by extracting the deviation and height (these will be collectively referred to as overhead line information) by means of a ranging sensor and comparing previously prepared reference overhead-line information and measured overhead-line information with each other by means of continuous DP matching.

The difference from Embodiments 5 and 6 is that the deviation and height of the overhead line are used together instead of being used independently of each other, that is, both of the deviation and the height of the overhead line are used. The self-position estimation accuracy is considered to be improved greater when a plurality of types of information is used than when only one type of information is used.

A specific example of a device configuration in this embodiment is similar to that in Embodiment 4, which is shown in Fig. 13.

Thus, as shown in Fig. 13, a train self-position estimation device according to this embodiment includes a reference-information-data input unit 13, a measured-information-data input unit 23, a storage unit 33, a continuous-DP-matching unit 43, and a self-position estimation unit 53.

The reference-information-data input unit 13 inputs overhead line information on overhead lines that is acquired as a reference by imaging and analyzing characteristic changes of the overhead lines in advance (reference overhead-line data) and absolute position information and stores them in the storage unit 33.

The measured-information-data input unit 23 inputs overhead line information on an overhead line that is measured at the current position and overhead line information on the last several lines before the current position (measured overhead-line data) and stores them in the storage unit 33.

The storage unit 33 stores the overhead line information including the reference overhead-line data and the measured overhead-line data, the absolute position information, matching result information, and the like as a database.

The continuous-DP-matching unit 43 performs elastic matching by using the reference information data and the measured information data and calculates where in the series of reference information data the measured information data best matches. In other words, the continuous-DP-matching unit 43 performs continuous DP matching. The result of the continuous DP matching thus calculated (matching position data) is outputted to and stored in the storage unit 33.

The self-position estimation unit 53 estimates the self-position of the train by using the result of the continuous DP matching and the absolute position information.

A flowchart in this embodiment is similar to that in Embodiment 4, which is shown in Fig. 12.

Firstly, the overhead line information that is acquired as a reference by performing imaging and analysis in advance (reference overhead-line data) is inputted into the reference-overhead-line-data input unit 13 (Step V1). The absolute position information is also inputted into the reference-overhead-line-data input unit 13.

Then, the overhead line information on an overhead line that is measured at the current position and the overhead line information on the last several lines before the current position (measured overhead-line data) are inputted into the measured-overhead-line-data input unit 23 (Step V2).

Thereafter, the continuous-DP-matching unit 43 performs elastic matching by using the reference overhead-line data and the measured overhead-line data, and calculates where in the series of reference overhead-line data the measured overhead-line data best matches (Step V3).

Then, the self-position estimation unit 53 estimates the self-position of the train by using the result of the continuous DP matching by the continuous-DP-matching unit 43 and the absolute position information (Step V4).

Further, Step V2 to Step V4 are iterated until the imaging of the overhead line (the measurement of the overhead line) ends (Step V5).

Embodiment 7 as described above brings about the following advantageous effects.

(1) The self-position of a train can be found with high accuracy.

(2) The self-position of a train can be found at short intervals.

(3) Self-position estimation is possible even if the speed is different from when the reference data is acquired.

(4) Stable self-position estimation is possible by using a plurality of pieces of overhead line information.

(5) No GPS or encoder is required.

(6) The GPS or encoders cannot detect when the train enters the inbound line or the outbound line by mistake, whereas the present invention can detect such a situation since the inbound overhead line and the outbound overhead line have mutually different information.

INDUSTRIAL APPLICABILITY

The present invention is widely industrially applicable as a train self-position estimation device using continuous DP matching.

EXPLANATION OF REFERENCE NUMERALS

| | |
|---|---|
| 10 | reference-deviation-data input unit |
| 11 | reference-height-data input unit |
| 12 | reference-wear-width-data input unit |
| 13 | reference-overhead-line-data input unit |
| 20 | measured-deviation-data input unit |
| 21 | measured-height-data input unit |
| 22 | measured-wear-width-data input unit |
| 23 | measured-overhead-line-data input unit |
| 30, 31, 32, 33 | storage unit |
| 40, 41, 42, 43 | continuous-DP-matching unit |
| 50, 51, 52, 53 | self-position estimation unit |

**Claims**

1. A train self-position estimation device that estimates a self-position of a train by comparing overhead line data that is acquired as a reference by collecting characteristic changes of an overhead line above the train in time series in advance during travel of the train (hereinafter referred to as the reference overhead-line data) and overhead line data that is acquired by measuring the overhead line at a current position in time series (hereinafter referred to as the measured overhead-line data) with each other by means of continuous DP matching, **characterized in that** the self-position estimation device comprises:

a reference-overhead-line-data input unit that inputs the reference overhead-line data;
a storage unit that stores the reference overhead-line data inputted by the reference-overhead-line-data input unit as a database;
a measured-overhead-line-data input unit that inputs the measured overhead-line data;
a continuous-DP-matching unit that performs elastic matching on the reference overhead-line data inputted by the reference-overhead-line-data input unit and stored in the storage unit as the database and the measured overhead-line data inputted by the measured-overhead-line-data input unit, and calculates where in the series of reference information data the measured information data best matches; and
a self-position estimation unit that estimates the self-position of the train by using a result of the continuous DP matching by the continuous-DP-matching unit and absolute position information.

2. The train self-position estimation device according to claim 1, **characterized in that** one or a combination of two or three of deviation of the overhead line, height of the overhead line, and wear width of the overhead line is used as the overhead line data.

3. The train self-position estimation device according to claim 1, **characterized in that** the overhead line data is acquired by image processing.

4. The train self-position estimation device according to claim 1, **characterized in that** the overhead line data is acquired by a ranging sensor installed on the train.

5. The train self-position estimation device according to claim 1, **characterized in that** the measured overhead-line data is time-series data at the current position and a plurality of positions before and after the current position.

6. The train self-position estimation device according to claim 1, **characterized in that** speed of the train during the acquisition of the measured overhead-line data is different from speed of the train during the acquisition of the reference overhead-line data.

7. The train self-position estimation device according to claim 1, **characterized in that** the continuous-DP-matching unit calculates where in the series of reference information data the measured information data best matches, by finding the minimum value among values each being the sum of squares of Euclidean distances between model points corresponding to the reference overhead-line data and input points corresponding to the measured overhead-line data.

# *Fig.1*

$$X_n(t) = \begin{pmatrix} x_n(t) \\ z_n(t) \end{pmatrix} : \text{INPUT COORDINATE VALUE} \qquad X_m(t) = \begin{pmatrix} x_m(t) \\ z_m(t) \end{pmatrix} : \text{MODEL COORDINATE VALUE}$$

t : TIME

k(t) : TIME LAG FROM IDEAL CORRESPONDING POINT

# *Fig.2*

(a) [0, 1, 2, 1, 2, 3, 2]          (b) [0, 2, 1, 3, 2]

# *Fig.3*

*Fig.4*

*Fig.5*

## *Fig. 6*

```
        ( START )
           │
    S1 ──┤ INPUT REFERENCE
         │ DEVIATION DATA │
           │
    S2 ──┤ INPUT MEASURED │◄──────┐
         │ DEVIATION DATA │       │
           │                       │
    S3 ──┤ CONTINUOUS DP │         │
         │   MATCHING    │         │
           │                       │
    S4 ──┤ SELF-POSITION ESTIMATION │
           │                       │
           ◇                       │
       END OF          no          │
       IMAGING ? ──────────────────┘
           │
    S5    yes
           │
        ( END )
```

## *Fig. 7*

30

```
10 ──┤ REFERENCE-DEVIATION-DATA    DEVIATION DATA
     │ INPUT UNIT                ─────────────────►

20 ──┤ MEASURED-DEVIATION-DATA    DEVIATION DATA
     │ INPUT UNIT                ─────────────────►

                                  REFERENCE DEVIATION
                                  DATA
                                  MEASURED DEVIATION
                                  DATA
40 ──┤ CONTINUOS-DP-MATCHING    ◄─────────────────
     │ UNIT                     ─────────────────►
                                  MATCHING POSITION
                                  DATA

                                  MATCHING POSITION
                                  DATA
50 ──┤ SELF-POSITION ESTIMATION ◄─────────────────
     │ UNIT                     ─────────────────►
                                  SELF-POSITION
                                  DATA
```

STORAGE
UNIT

## Fig.8

```
        ( START )
            │
T1 ─┐  ┌─────────────────┐
    └──│ INPUT REFERENCE │
       │   HEIGHT DATA   │
       └─────────────────┘
            │
T2 ─┐  ┌─────────────────┐ ◄──────┐
    └──│ INPUT MEASURED  │        │
       │   HEIGHT DATA   │        │
       └─────────────────┘        │
            │                     │
T3 ─┐  ┌─────────────────┐        │
    └──│║ CONTINUOUS DP  ║│       │
       │║   MATCHING     ║│       │
       └─────────────────┘        │
            │                     │
T4 ─┐  ┌───────────────────────┐  │
    └──│ SELF-POSITION ESTIMATION│ │
       └───────────────────────┘  │
            │                     │
         ◢─────────◣         no   │
        ◢  END OF   ◣ ──────────┘
        ◥ IMAGING ? ◤
         ◥─────────◤
   T5 ─┘      │ yes
         ( END )
```

## Fig.9

```
11 ─┐  ┌────────────────────┐  HEIGHT DATA              ┌──────────┐  31
    └──│ REFERENCE-HEIGHT-DATA│ ───────────────────────►│          │◄─┘
       │    INPUT UNIT       │                          │          │
       └────────────────────┘                           │          │
                                                         │          │
21 ─┐  ┌────────────────────┐  HEIGHT DATA              │          │
    └──│ MEASURED-HEIGHT-DATA│ ───────────────────────►│          │
       │    INPUT UNIT       │                          │          │
       └────────────────────┘                           │          │
                              REFERENCE HEIGHT           │ STORAGE  │
                              DATA                       │  UNIT    │
                              MEASURED HEIGHT            │          │
                              DATA                       │          │
41 ─┐  ┌────────────────────┐ ◄───────────────────────│          │
    └──│ CONTINUOS-DP-MATCHING│                         │          │
       │       UNIT          │ ───────────────────────►│          │
       └────────────────────┘  MATCHING POSITION        │          │
                              DATA                       │          │
                              MATCHING POSITION          │          │
51 ─┐  ┌────────────────────┐  DATA                     │          │
    └──│ SELF-POSITION ESTIMATION│ ◄────────────────────│          │
       │       UNIT          │                          │          │
       └────────────────────┘ ───────────────────────►└──────────┘
                              SELF-POSITION
                              DATA
```

## Fig. 10

```
          ( START )
             |
    U1 ──  INPUT REFERENCE
           WEAR-WIDTH DATA
             |
    U2 ──  INPUT MEASURED  ◄───┐
           WEAR-WIDTH DATA     │
             |                 │
    U3 ──  CONTINUOUS DP       │
           MATCHING            │
             |                 │
    U4 ──  SELF-POSITION ESTIMATION
             |                 │
           ◇ END OF      no    │
             IMAGING ? ────────┘
    U5 ──       | yes
           ( END )
```

## Fig. 11

# Fig.12

```
          START

V1     INPUT REFERENCE
       OVERHEAD-LINE DATA

V2     INPUT MEASURED
       OVERHEAD-LINE DATA

V3     CONTINUOUS DP
       MATCHING

V4     SELF-POSITION ESTIMATION

           END OF          no
V5        IMAGING ?

                yes

           END
```

# Fig.13

```
13
REFERENCE-OVERHEAD-LINE-DATA    OVERHEAD LINE DATA
INPUT UNIT

MEASURED-OVERHEAD-LINE-DATA     OVERHEAD LINE DATA
INPUT UNIT
                                                          STORAGE
23                              REFERENCE OVERHEAD-        UNIT
                                LINE DATA
                                MEASURED OVERHEAD-
43     CONTINUOS-DP-MATCHING    LINE DATA
       UNIT
                                MATCHING POSITION
                                DATA

                                MATCHING POSITION
                                DATA
53     SELF-POSITION ESTIMATION
       UNIT
                                SELF-POSITION
                                DATA
```

33

22

**EP 3 069 955 A1**

## INTERNATIONAL SEARCH REPORT

| International application No. |
|---|
| PCT/JP2014/079526 |

**A. CLASSIFICATION OF SUBJECT MATTER**
*B61L25/02*(2006.01)i, *B60L3/00*(2006.01)i, *B60M1/28*(2006.01)i, *G06T7/00* (2006.01)i

According to International Patent Classification (IPC) or to both national classification and IPC

**B. FIELDS SEARCHED**

Minimum documentation searched (classification system followed by classification symbols)
B61L25/02, B60L3/00, B60M1/28, G06T7/00

Documentation searched other than minimum documentation to the extent that such documents are included in the fields searched
Jitsuyo Shinan Koho      1922–1996    Jitsuyo Shinan Toroku Koho    1996–2014
Kokai Jitsuyo Shinan Koho   1971–2014    Toroku Jitsuyo Shinan Koho    1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-234338 A (Railway Technical Research Institute), 15 October 2009 (15.10.2009), entire text; all drawings (Family: none) | 1-7 |
| A | JP 2010-285054 A (Meidensha Corp.), 24 December 2010 (24.12.2010), entire text; all drawings (Family: none) | 1-7 |
| A | JP 2011-230722 A (Meidensha Corp.), 17 November 2011 (17.11.2011), entire text; all drawings & WO 2011/136020 A1    & TW 201144108 A & CN 102869535 A      & KR 10-2012-0134149 A | 1-7 |

[X] Further documents are listed in the continuation of Box C.     [ ] See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    20 November, 2014 (20.11.14) | Date of mailing of the international search report<br>    02 December, 2014 (02.12.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2014/079526 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-191778 A  (Railway Technical Research Institute),<br>04 October 2012 (04.10.2012),<br>entire text; all drawings<br>(Family: none) | 1-7 |
| A | JP 2000-85581 A  (The Nippon Signal Co., Ltd.),<br>28 March 2000 (28.03.2000),<br>entire text; all drawings<br>(Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008247154 A
- JP 2011201426 A
- JP 2011209026 A
- JP 2008298733 A

- JP 2002037070 A
- JP 2010243417 A
- JP 2010243416 A

**Non-patent literature cited in the description**

- **SEIICHI UCHIDA.** DP Matching - Fundamentals and Applications. *IEICE technical report,* 2006, vol. 166, 31-36